# EUROPEAN PATENT SPECIFICATION

(11) **EP 4 455 724 B1**
(45) Date of publication and mention of the grant of the patent: **28.10.2026**
(21) Application number: 23170151.7
(22) Date of filing: 26.04.2023
(51) Int. Cl.: G01S 7/497, G01S 7/40, G01S 17/931, G01S 13/931, G01S 17/87, G06V 20/56

(54) **METHOD FOR DETECTING AN OBSTRUCTION OF A FIRST EXTERIOR SENSOR OF A FIRST VEHICLE, A METHOD FOR ASSISTING A DETECTION OF AN OBSTRUCTION OF A FIRST EXTERIOR SENSOR, DATA PROCESSING APPARATUS, COMPUTER PROGRAM, COMPUTER-READABLE STORAGE MEDIUM, SYSTEM FOR DETECTING AN OBSTRUCTION OF A FIRST EXTERIOR SENSOR, AND USE**
VERFAHREN ZUM ERKENNEN EINES HINDERNISSES EINES ERSTEN AUSSENSENSORS EINES ERSTEN FAHRZEUGS, EIN VERFAHREN ZUR UNTERSTÜTZUNG DER ERKENNUNG EINES HINDERNISSES EINES ERSTEN AUSSENSENSORS, DATENVERARBEITUNGSGERÄT, COMPUTERPROGRAMM, COMPUTERLESBARES SPEICHERMEDIUM, SYSTEM ZUM ERKENNEN EINES HINDERNISES EINES ERSTEN AUSSENSENSORS, UND VERWENDUNG
PROCÉDÉ DE DÉTECTION D'UNE OBSTRUCTION D'UN PREMIER CAPTEUR EXTÉRIEUR D'UN PREMIER VÉHICULE, PROCÉDÉ D'AIDE À LA DÉTECTION D'UNE OBSTRUCTION D'UN PREMIER CAPTEUR EXTÉRIEUR, APPAREIL DE TRAITEMENT DE DONNÉES, PROGRAMME INFORMATIQUE, SUPPORT DE STOCKAGE LISIBLE PAR ORDINATEUR, SYSTÈME DE DÉTECTION D'UNE OBSTRUCTION D'UN PREMIER CAPTEUR EXTÉRIEUR, ET UTILISE

(43) Date of publication of application: 30.10.2024
(73) Proprietor: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Kransell & Wennborg KB

(56) References cited:
- DE-A1- 102011 017 593
- DE-A1- 102018 121 697
- US-A1- 2021 221 390
- US-B1- 9 221 396
- KIM JIN-WOO ET AL: "A Cooperative Communication Protocol for QoS Provisioning in IEEE 802.11p/Wave Vehicular Networks", SENSORS, vol. 18, no. 11, 25 November 2018 (2018-11-25), CH, pages 3622, XP093104887, ISSN: 1424-8220, DOI: 10.3390/s18113622
- KIM JIN-WOO ET AL: "A Cooperative Communication Protocol for QoS Provisioning in IEEE 802.11p/Wave Vehicular Networks", SENSORS, vol. 18, no. 11, 25 November 2018 (2018-11-25), CH, pages 3622, XP93104887, ISSN: 1424-8220, DOI: 10.3390/s18113622

## Description

The present disclosure relates to a method for detecting an obstruction of a first exterior sensor of a first vehicle.

The present disclosure also is directed to a method for assisting a detection of an obstruction of a first exterior sensor of a first vehicle by a second vehicle comprising a second exterior sensor.

Additionally, the present disclosure relates to a data processing apparatus, a computer program, and a computer-readable storage medium.

Moreover, the present disclosure is directed to a system for detecting an obstruction of a first exterior sensor of a first vehicle.

The present disclosure also relates to a use of second sensor data of a second sensor of a second vehicle.

In vehicles such as the first vehicle, exterior sensors such as the first exterior sensor are used to sense an environment of the vehicle. An exterior sensor is to be understood as a sensor that has a field of detection being at least partially arranged in an exterior of the vehicle. Examples of exterior sensors include optical cameras, infrared cameras, radar units and lidar units.

As far as the calibration and validation of sensors is concerned, US 2021/0221390 A1 discloses a vehicle sensor calibration from inter-vehicle communication and US 9,221,396 B1 discloses cross-validating sensors of an autonomous vehicle. Moreover, DE 10 2018 121 697 A1 shows cooperative operation of vehicles.

In this context, exterior sensors may form part of a driver assistance system or may be communicatively connected to a driver assistance system. Moreover, exterior sensors may form part of an autonomous driving system or may be communicatively connected to an autonomous driving system.

In case an exterior sensor is obstructed, the exterior sensor is not able to sense the environment with the required reliability and accuracy. However, not every detection result suffering from low accuracy or reliability is caused by a sensor obstruction. In other words, detecting a sensor obstruction is a challenge, especially during the use of a vehicle comprising the exterior sensor.

It is therefore an objective of the present disclosure to facilitate detection of a sensor obstruction.

The problem is at least partially solved or alleviated by the subject matter of the independent claims of the present disclosure, wherein further examples are incorporated in the dependent claims.

According to a first aspect, there is provided a method for detecting an obstruction of a first exterior sensor of a first vehicle. The method comprises:
- determining that the first exterior sensor provides sensor data of reduced quality,
- providing a comparison request for a second vehicle, wherein the comparison request comprises a request to provide second sensor data from a second exterior sensor of the second vehicle,
- receiving a readiness confirmation from the second vehicle, wherein the readiness confirmation comprises collection time data describing a collection time of the second sensor data
   and/or collection position data describing a collection position when the second sensor data are collected,
- triggering collecting first sensor data by the first exterior sensor based on the readiness confirmation,
- receiving first sensor data from the first exterior sensor and receiving second sensor data from the second vehicle,
- determining a first quality indicator describing a quality of the received first sensor data, determining a second quality indicator describing a quality of the received second sensor data and comparing the second quality indicator to the first quality indicator, and
- triggering an obstruction notification, if the first quality indicator and the second quality indicator differ by a predefined difference threshold or more.

It is noted that during execution of the present method, the first exterior sensor collects at least two sets of sensor data which may both referred to as first sensor data. Based on the first set of sensor data, the method is able to determine that the first exterior sensor provides sensor data of reduced quality. The second set of sensor data is used for calculating the first quality indicator. In the present context, the quality of the sensor data may be determined using an accuracy indicator. This means that the quality indicator may be an accuracy indicator. Thus, the quality threshold may be an accuracy threshold. The accuracy indicator may relate to an object detection accuracy based on the sensor data. Thus, sensor data of reduced quality may be detected if an object detection accuracy based on sensor data is lower than expected. In such a case, the second vehicle is requested to assist the first vehicle. In this context, the first vehicle and the second vehicle may communicate directly, e.g. using V2V communication. Alternatively, the first vehicle and the second vehicle may communicate via a server being remote from both the first vehicle and the second vehicle and/or via a cloud unit. The second vehicle provides second sensor data which may be compared to the first sensor data. For example, an identical object detection algorithm may be applied to both the first sensor data and the second sensor data. Based thereon, an obstruction notification can be issued inside the first vehicle or can be sent to an owner of the vehicle, e.g. if no occupants is in the first vehicle being an autonomous vehicle. The fact that second sensor data is used for determining the obstruction of the first exterior sensor renders the determination highly reliable.

Following the obstruction notification, the obstruction may be eliminated, e.g. by cleaning the obstructed sensor.

It is noted that the method has been described for one obstructed sensor only. In a case in which the first vehicle comprises more than one exterior sensor, the method can be executed for each of the exterior sensors. This may be done in a parallel or sequential manner. In such a case, the sensor data may comprise an identifier describing the exterior sensor that has provided corresponding sensor data.

According to an example, the first exterior sensor comprises an optical camera and the first sensor data and the second sensor data comprises image data.

According to an example, determining that the first exterior sensor provides sensor data of reduced quality comprises
- receiving first sensor data from the first exterior sensor,
- determining a first quality indicator describing a quality of the received first sensor data and comparing the determined quality indicator with a quality threshold describing a lower quality acceptance limit, and
- determining that the first quality indicator is inferior to the lower quality acceptance limit.

As has been explained before, the quality indicator may be an accuracy indicator, for example describing an object detection accuracy based on the first sensor data. The quality threshold may be a system setting or a user setting. Thus, it is possible to determine that the first exterior sensor provides sensor date of reduced quality. This may be done with high reliability. In order to further increased reliability, a plurality of instances of first sensor data may be received, a first quality indicator may be determined for each of the instances of first sensor data and compared to the quality threshold. In such a case, the first quality indicator may be formed as an average of the quality indicators of the plurality of instances of first sensor data.

According to an example, a quality of first sensor data is compared to a quality threshold for determining that the first exterior sensor provides sensor data of reduced quality. The quality threshold may be provided by a database. The database may be located on the first vehicle or exterior to the first vehicle. In the latter case, the database is communicatively connected to the first vehicle. Altogether, using a database allows to reliably provide a quality threshold. Moreover, a reduced quality of sensor data may be reliably determined.

According to another example, the quality threshold in a database may be provided as a function of environmental conditions. The environmental conditions may comprise at least one of an indicator of daytime or nighttime and a weather condition such as rain or sunshine. This has the effect that the quality threshold is appropriate for current environmental conditions.

According to another example, the quality threshold may be provided as a function of a detected object.

In an example, the quality threshold is a detection accuracy threshold. The detection accuracy threshold of a human being under daytime conditions may be 95%. The detection accuracy threshold of a human being under nighttime conditions may be 91%. The detection accuracy threshold of a human being under rain conditions may be 88%. The detection accuracy threshold of a car under daytime conditions may be 97%. The detection accuracy of a car under nighttime conditions may be 92%. The detection accuracy threshold of a car under rain conditions may be 90%. The detection accuracy threshold of a bicycle under daytime conditions may be 96%. The detection accuracy threshold of a bicycle under nighttime conditions may be 90%. The detection accuracy threshold of a bicycle under rain conditions may be 85%.The detection accuracy threshold of a traffic light under daytime conditions may be 99%. The detection accuracy threshold of a traffic light under nighttime conditions may be 95%. The detection accuracy threshold of a traffic light under rain conditions may be 92%.

The readiness confirmation comprises collection time data describing a collection time and/or collection position data describing a collection position. Collecting first sensor data is triggered based on the collection time data. Alternatively or additionally, collecting first sensor data is triggered based on the collection position data. This allows that the first sensor data and the second sensor data are collected within a comparatively small time interval and/or within a comparatively small position interval. This has the effect that the first sensor data and the second sensor data are collected under highly similar conditions which enhances the comparability of the first sensor data and the second sensor data. Consequently, a potential obstruction of the first exterior sensor may be determined with high accuracy.

According to an example, determining a first quality indicator and determining a second quality indicator comprises applying an object detection technique to the first sensor data and to the second sensor data. This is especially useful if the first exterior sensor and the second sensor are used in for object detection. Thus, the first quality indicator and the second quality indicator are determined in a context which is close to the actual use of the first sensor data and the second sensor data. This enhances the accuracy of obstruction detection.

In an example, the first quality indicator and the second quality indicator relate to an object detection accuracy. In other words, the first quality indicator and the second quality indicator are object detection accuracy indicators. Thus, the first quality indicator and the second quality indicator are closely related to the use of the first sensor data and the second sensor data. This allows for an accurate detection of a sensor obstruction. As in the previous examples, an object detection accuracy may be expressed by a percentage.

In the present context, an accuracy of object recognition may be determined using a convolutional neural network. In this case, an object detection result may be compared to ground reference data. Also, siamese networks can be used to compare the different input data and recognize differences. It is noted that siamese networks are a type of neural network that are trained to recognize similarities and differences between pairs of datasets. They work by comparing the features of two datasets and producing a similarity score.

It is also possible to determine the accuracy of object recognition using Fourier transformation. Also Fourier transformation can be used to compare two datasets. Fourier transformation converts the dataset from the spatial domain to the frequency domain, which provides a different representation of the dataset. In the frequency domain a representation of the dataset shows how much of each frequency is present in the dataset.

According to a further example, determining a first quality indicator describing a quality of the received first sensor data and determining a second quality indicator describing a quality of the received second sensor data may comprise overlapping sensor data in order to find common objects and compare accuracy of detection of common objects. In a case in which sensor data are very different, data from the second vehicle may be discarded and another vehicle may be requested to collect second sensor data.

In an example, the comparison request comprises position data describing a position of the first vehicle and/or identification data describing an identity of the first vehicle. The identity of the first vehicle may for example be described by a license plate number. The position data may be provided in real time. Optionally, also driving direction data indicating a driving direction of the first vehicle may be provided. This allows the second vehicle to collect second sensor data at a position close to the first vehicle. This enhances the comparability of the first sensor data and second sensor data, thereby improving the detection of an obstructed sensor.

According to a further example, the method further comprises comparing the first quality indicator to a deactivation quality threshold and triggering deactivation of an autonomous driving mode if the quality indicator is inferior to the deactivation quality threshold. In simplified words, an autonomous driving mode is switched off, if the quality of the sensor data provided by the first sensor is very low. In such a case, the first vehicle needs to stop or a human driver needs to take over control of the first vehicle. This enhances driving safety of the first vehicle.

According to another example, the method further comprises comparing the first quality indicator to a stopping quality threshold and triggering stopping of the first vehicle if the quality indicator is inferior to the stopping quality threshold. In this context, an autonomous driving mode may be used to stop the first vehicle.

It is noted that the method according to the present invention can still be performed in a situation in which the first vehicle is stopped since the second vehicle may pass by the first vehicle.

In an example, the method further comprises receiving a lane change request from the second vehicle and triggering execution of a lane change maneuver. Thus, the first vehicle is triggered to change a lane in order to provide space for the second vehicle.

According to a second aspect, there is provided a method for assisting a detection of an obstruction of a first exterior sensor of a first vehicle by a second vehicle comprising a second exterior sensor. The method comprises:
- receiving a comparison request from the first vehicle, wherein the comparison request comprises a request to provide second sensor data from the second exterior sensor of the second vehicle,
- providing a readiness confirmation for the first vehicle, wherein the readiness confirmation (RC) comprises collection time data describing a collection time of the second sensor data
   and/or collection position data describing a collection position when the second sensor data are collected,
- triggering collecting second sensor data by the second exterior sensor based on the readiness confirmation,
- receiving the second sensor data from the second exterior sensor, and
- providing second sensor data to the first vehicle.

Thus, by the second vehicle, second sensor data may be provided to the first vehicle which assists the first vehicle in determining whether the first exterior sensor is obstructed or not. Due to the fact that both the first sensor data collected by the first vehicle and the second sensor data collected by the second vehicle are collected based on the readiness confirmation, high comparability of the first sensor data and the second sensor data is ensured. This allows the first vehicle to detect an obstructed exterior sensor with high precision and reliability.

It is noted that in a case in which more than one second exterior sensor is provided on the second vehicle, one out of the plurality of second exterior sensors is selected. In such a situation, the second exterior sensor is selected which offers the highest potential for comparability of second sensor data and the first sensor data collected by the first exterior sensor of the first vehicle. In one example, a second exterior sensor being located at a front portion of the second vehicle may be used. Such a second exterior sensor may be formed as a front exterior camera. In another example, a second exterior sensor being located in a back portion of the second vehicle may be used. Such a second sensor may be formed as a rear exterior camera. The second exterior sensor may be selected as a function of a driving direction of the second vehicle and the first vehicle.

As has been explained in connection with the first exterior sensor, also the second exterior sensor may comprise an optical camera, an infrared camera, a radar unit or a lidar unit.

In an example, the first exterior sensor and the second exterior sensor are of the same type.

The method further comprises determining a collection time and/or a collection position. The readiness confirmation comprises collection time data describing the collection time and/or collection position data describing the collection position. Collecting the second sensor data is triggered based on the collection time data. Alternatively or additionally, collecting the second sensor data is triggered based on the collection position data. As has been mentioned before, the readiness confirmation is provided to the first vehicle. This allows that the first sensor data and the second sensor data are collected within a comparatively small time interval and/or within a comparatively small position into wall. This has the effect that the first sensor data and the second sensor data are collected under highly similar conditions which enhances the comparability of the first sensor data and the second sensor data. Consequently, a potential obstruction of the first exterior sensor may be determined with high accuracy.

According to an example, the comparison request comprises position data describing a position of the first vehicle and/or identification data describing an identity of the first vehicle. The method further comprises triggering detecting the first vehicle based on the position data and/or the identification data. Consequently, the second vehicle may be located in proximity to the first vehicle when collecting the second sensor data. This further enhances the comparability of the second sensor data and the first sensor data.

In an example, the method further comprises determining the collection time and/or the collection position based on the detection of the first vehicle. Thus, the second vehicle may be brought in a position adjacent to the first vehicle such that first and second sensor data are collected in more or less the same environment. The position adjacent to the first vehicle may be laterally adjacent to the first vehicle. In case the first vehicle cannot be detected, the method may be abandoned.

In a further example, the method further comprises providing a lane change request for the first vehicle. Thus, the first vehicle is informed that a lane change may be desirable from the perspective of the second vehicle. Based thereon, a lane change of the first vehicle may be triggered in order to provide space for the second vehicle.

In an example, the method further comprises triggering moving the second vehicle in an assistance position adjacent to the first vehicle and providing a readiness confirmation when reaching the assistance position.

The methods of the present disclosure, i.e. the method for detecting an obstruction of a first exterior sensor of a first vehicle and the method for assisting a detection of an obstruction of a first exterior sensor of a first vehicle by a second vehicle comprising a second exterior sensor, may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out at least one of the methods of the present disclosure. This covers three alternatives. According to a first alternative, the data processing apparatus comprises means for carrying out the method for detecting an obstruction of a first exterior sensor of a first vehicle. According to a second alternative, the data processing apparatus comprises means for carrying out the method for assisting a detection of an obstruction of a first exterior sensor of a first vehicle by a second vehicle comprising a second exterior sensor. According to a third alternative, the data processing apparatus comprises both means for carrying out the method for detecting an obstruction of a first exterior sensor of a first vehicle and means for carrying out the method for assisting a detection of an obstruction of a first exterior sensor of a first vehicle by a second vehicle comprising a second exterior sensor. Using such a data processing apparatus, an obstruction of the first sensor of the first vehicle may be determined with high precision and reliability.

According to a fourth aspect, there is provided computer program comprising instructions which, when the program is executed by a computer, cause the computer to carry out at least one of the methods of the present disclosure. This covers three alternatives. According to a first alternative, the computer program comprises instructions which cause the computer to carry out the method for detecting an obstruction of a first exterior sensor of a first vehicle. According to a second alternative, the computer program comprises instructions which cause the computer to carry out the method for assisting a detection of an obstruction of a first exterior sensor of a first vehicle by a second vehicle comprising a second exterior sensor. According to a third alternative, the computer program comprises instructions which cause the computer to carry out both the method for detecting an obstruction of a first exterior sensor of a first vehicle and the method for assisting a detection of an obstruction of a first exterior sensor of a first vehicle by a second vehicle comprising a second exterior sensor. Using such a computer program, an obstruction of the first sensor of the first vehicle may be determined with high precision and reliability.

According to a fifth aspect, there is provided a computer-readable storage medium comprising instructions which, when executed by a computer, cause the computer to carry out at least one of the methods of the present disclosure. This covers three alternatives. According to a first alternative, the storage medium comprises instruction which cause the computer to carry out the method for detecting an obstruction of a first exterior sensor of a first vehicle. According to a second alternative, the storage medium comprises instructions which cause the computer to carry out the method for assisting a detection of an obstruction of a first exterior sensor of a first vehicle by a second vehicle comprising a second exterior sensor. According to a third alternative, the storage medium comprises instructions which cause the computer to carry out the method for detecting an obstruction of a first exterior sensor of a first vehicle and the method for assisting a detection of an obstruction of a first exterior sensor of a first vehicle by a second vehicle comprising a second exterior sensor. Using such a storage medium, an obstruction of the first sensor of the first vehicle may be determined with high precision and reliability.

According to a sixth aspect, there is provided a system for detecting an obstruction of a first exterior sensor of a first vehicle, comprising a first data processing apparatus comprising means for carrying out the method of the present disclosure for detecting an obstruction of a first exterior sensor of a first vehicle and a second data processing apparatus comprising means for carrying out the method of the present disclosure for assisting a detection of an obstruction of a first exterior sensor of a first vehicle by a second vehicle comprising a second exterior sensor. Using such a system, an obstruction of the first sensor of the first vehicle may be determined with high precision and reliability.

According to a seventh aspect, there is provided a use of second sensor data of a second sensor of a second vehicle for detecting an obstruction of a first sensor of a first vehicle. when the first vehicle executes the method according to the first aspect and the second vehicle executes the method according to the second aspect. Using the second sensor data has the effect that an obstruction of the first sensor of the first vehicle may be determined with high precision and reliability.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a first traffic situation comprising a system according to the present disclosure for detecting an obstruction of a first exterior sensor of a first vehicle, and
- Figure 2: shows a second traffic situation, comprising the system of Figure 1 for detecting an obstruction of a first exterior sensor of a first vehicle.

The Figures are merely schematic representations and serve only to illustrate examples of the disclosure. Identical or equivalent elements are in principle provided with the same reference signs.

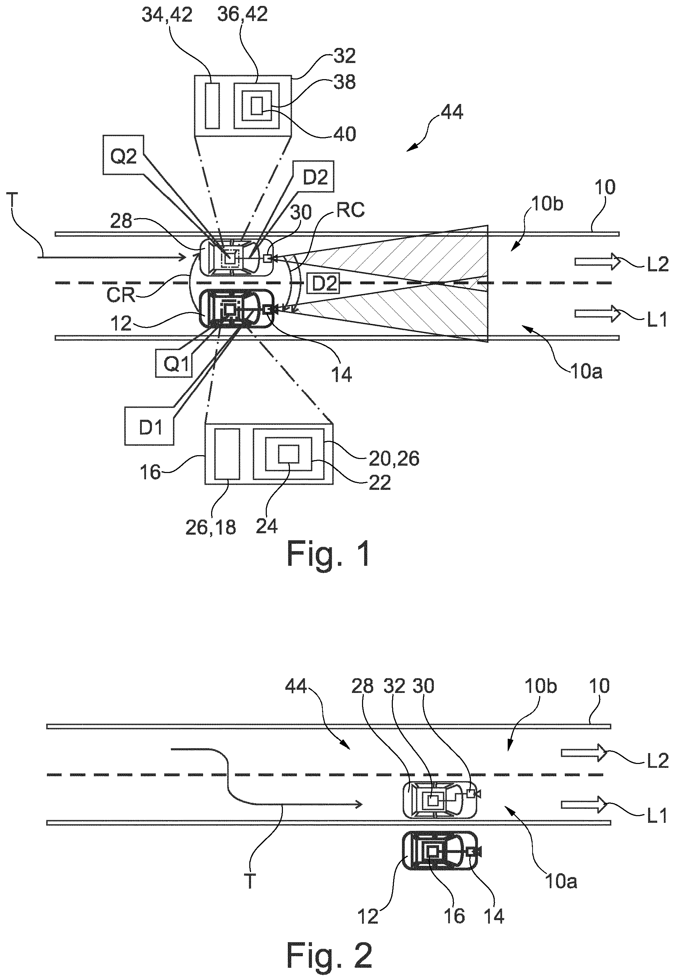

Figure 1 shows a first traffic situation.

The first traffic situation comprises a road 10 having two lanes 10a, 10b. A standard driving direction of both lanes 10a, 10b is oriented into the same direction. This is indicated by arrows L1, L2.

A first vehicle 12 is driving along direction L1 on lane 10a.

The first vehicle 12 comprises a first exterior sensor 14 which is represented as an optical camera.

In the example shown in Figure 1, a detection field of the first exterior sensor 14 faces forward with respect to a driving direction of the first vehicle 12. Thus, the optical camera of the first vehicle 12 may be referred to as a front camera or forward facing camera.

The first vehicle 12 also comprises a data processing apparatus 16 which is communicatively connected with the first exterior sensor 14

The data processing apparatus 16 comprises a data processing unit 18 and a data storage unit 20.

The data storage unit 20 comprises a computer-readable storage medium 22.

On the computer-readable storage medium 22, there is provided a computer program 24.

The computer program 24, and, thus, also the computer-readable storage medium 22 comprises instruction which, when executed by the data processing unit 18 or, more generally, a computer, cause the data processing unit 18 or the computer to carry out a method for detecting an obstruction of the first exterior sensor 14 of the first vehicle 12.

Consequently, the data processing unit 18 and the data storage unit 20 may as well be referred to as means 26 for carrying out the method for detecting an obstruction of the first exterior sensor 14 of the first vehicle 12.

Also a second vehicle 28 is driving on the road 10. The second vehicle is driving on lane 10b along direction L2. In the example shown in Figure 1, the first vehicle 12 and the second vehicle 28 are currently driving laterally adjacent to one another. The trajectory on which the second vehicle 28 has been traveling before reaching this position is indicated by arrow T.

The second vehicle 28 comprises a second exterior sensor 30 which is represented as an optical camera.

In the example shown in Figure 1, a detection field of the second exterior sensor 30 faces forward with respect to a driving direction of the second vehicle 28. Thus, the optical camera of the second vehicle 28 may be referred to as a front camera or forward facing camera.

The second vehicle 28 also comprises a data processing apparatus 32 which is communicatively connected with the second exterior sensor 30.

The data processing apparatus 32 comprises a data processing unit 34 and a data storage unit 36.

The data storage unit 36 comprises a computer-readable storage medium 38.

On the computer-readable storage medium 38, there is provided a computer program 40.

The computer program 40, and, thus, also the computer-readable storage medium 38 comprises instruction which, when executed by the data processing unit 34 or, more generally, a computer, cause the data processing unit 34 or the computer to carry out a method for assisting a detection of an obstruction of the first exterior sensor 14 of the first vehicle 12 by the second vehicle 28 comprising the second exterior sensor 30.

Consequently, the data processing unit 34 and the data storage unit 36 may as well be referred to as means 42 for carrying out the method for assisting a detection of an obstruction of the first exterior sensor 14 of the first vehicle 12 by the second vehicle 28 comprising the second exterior sensor 28.

Together, the data processing apparatus 16 and the data processing apparatus 32 form a system 44 for detecting an obstruction of the first exterior sensor 14 of a first vehicle 12.

In the following, the method for detecting an obstruction of the first exterior sensor 14 of the first vehicle 12 and the method for assisting a detection of an obstruction of the first exterior sensor of the first vehicle 12 by the second vehicle 28 comprising the second exterior sensor 30 will be explained in detail.

In this context, steps of the method for detecting an obstruction of the first exterior sensor 14 of the first vehicle 12 will be designated with reference signs S1x. Steps of the method for assisting a detection of an obstruction of the first exterior sensor 14 of the first vehicle 12 by the second vehicle 28 comprising the second exterior sensor 30 will be designated with reference signs S2x.

A first step S11 comprises determining that the first exterior sensor 14 provides sensor data of reduced quality.

Step S11 may be executed while the first vehicle 12 is driving along the road 10 and while the first exterior sensor 14 is used.

The first exterior sensor 14 may for example be used to provide first sensor data D1 for a driver assistance functionality or in the context of an autonomous driving mode of the first vehicle 12.

Thus, in order to determine that the first exterior sensor 14 provides sensor data of reduced quality, first sensor data D1 is received at the data processing apparatus 16.

A first quality indicator Q1 describing a quality of the received first sensor data D1 is determined. The quality indicator in the present example relates to an object detection accuracy. This means that an object detection technique is performed on the first sensor data D1 provided by the first exterior sensor 14. The object detection technique generates an indication of a detected object and at the same time a confidence indicator indicating a confidence by which the object has been detected. An alternative term for such a confidence indicator is a detection accuracy. The confidence indicator may be used as the first quality indicator Q1. The confidence indicator and, thus, the first quality indicator Q1, may have the form of a percentage.

In order to determine whether the quality of the first sensor data D1 is reduced, the first quality indicator Q1 is compared to a quality threshold describing a lower quality acceptance limit which is provided on the data storage unit 20.

For the ease of explanation, it is assumed that the quality threshold is a fixed value. However, in other examples, the quality threshold may be provided in a lookup table such that the quality threshold may be provided as a function of the detected object and as a function of an environmental conditions of the first vehicle 12 such as a weather condition.

If the comparison of the first quality indicator Q1 and the quality threshold turns out that the first quality indicator Q1 exceeds the quality threshold, the method is abandoned.

If the comparison of the first quality indicator Q1 and the quality threshold turns out that the first quality indicator Q1 is inferior to the quality threshold, the first exterior sensor 14 is considered to provide sensor date of reduced quality.

In this case, a second step S12 is executed. The second step S12 comprises providing a comparison request CR for the second vehicle 28.

The comparison request CR comprises a request to provide second sensor data D2 from the second exterior sensor 30 of the second vehicle 28.

Moreover, the comparison request CR comprises position data describing a position of the first vehicle 12. The position data is continuously updated while the first vehicle 12 is moving.

In simplified words, the first vehicle 12 asks the second vehicle 28 to provide second sensor data D2 to which it can compare the first sensor data D1 in order to determine whether the first exterior sensor 14 is obstructed.

The comparison request CR may be transferred directly from the data processing apparatus 16 to the data processing apparatus 32. To this end, both the data processing apparatus 16 and the data processing apparatus 32 comprises a communication unit (not shown) being configured to wirelessly transmit the comparison request CR.

In an alternative example, the communication between the first vehicle 12 and the second vehicle 28 is established via a cloud unit. In this example, the communication unit of the data processing apparatus 16 is configured to communicate with the cloud unit and the communication unit of the data processing apparatus 32 is also configured to communicate with the cloud unit.

The comparison request CR triggers the execution of the method for assisting a detection of an obstruction of the first exterior sensor 14 of the first vehicle 12 by the second vehicle 28 comprising the second exterior sensor 30 which is performed by the means 42 for carrying out the method for assisting a detection of an obstruction of the first exterior sensor 14 of the first vehicle 12 by the second vehicle 28 comprising the second exterior sensor 30.

A first step S21 of this method comprises receiving the comparison request CR from the first vehicle 12.

In a second step S22, detection of the first vehicle 12 is triggered based on the position data of the comparison request CR. As has already been mentioned above, the position data is continuously updated.

The first vehicle 12 may be detected using the second exterior sensor 30 of the second vehicle 28. Thus, in the present example, the first vehicle 12 may be detected using the camera.

This means that the second exterior sensor 30 collects second sensor data D2 on which an object recognition technique is performed. If a vehicle is detected at a position corresponding to the position indicated by the position data of the comparison request CR, this vehicle is considered to be the first vehicle 12.

It is noted that in another example, the comparison request CR may comprise identification data describing an identity of the first vehicle 12, e.g. a license plate number. In this example, the first vehicle 12 may be detected by the second vehicle 28 using the identification data. Of course, also a combination of identification data and position data is possible.

Once the first vehicle 12 has been detected, a collection time and/or a collection position is determined in a third step S23. The collection time and/or the collection position refer to a time and position at which second sensor data D2 is to be collected using the second sensor 30.

The collection time and the collection position may relates to the future. This means that the collection time is later than a current time and the collection position refers to a position that has not yet been reached by the second vehicle 28.

The collection position may be a relative position which is determined and described with respect to the position of the first vehicle 12.

Based on the determined collection time and/or collection position, a fourth step S24 may comprise triggering moving the second vehicle 28 in an assistance position adjacent to the first vehicle. The assistance position may correspond to the collection position as determined in step S23.

Once the second vehicle 28 has reached the collection position, a readiness confirmation RC is provided to the first vehicle 12 in a fifth step S25.

In the representation of Figure 1, the second vehicle 28 has already reached this assistance position which is located laterally adjacent to the first vehicle 12. In this position, both the first sensor 14 and the second sensor 30 point into the same direction such that the detection fields of the first sensor 14 and the second sensor 30 have a comparatively large overlap. In simplified words, both the first sensor 14 and the second sensor 30 may sense the same portion of the environment.

The readiness confirmation RC may as well comprise the collection time data describing the collection time and/or collection position data describing the collection position.

The readiness confirmation RC is received at the first vehicle 12 in third step S13.

Thereafter, in a sixth step S26 collecting the second sensor data D2 is triggered.

At the same time and/or at the same position, in a fourth step S14, collecting the first sensor data D1 is triggered.

In other words, the first exterior sensor 14 and the second exterior sensor 30 collects corresponding first sensor data D1 and second sensor data D2 while being located at the same position along the road 10 and/or at the same time. This has the effect that the collected first sensor data D1 and the collected second sensor data D2 are highly comparable.

It is understood, that collecting the first sensor data D1 and collecting the second sensor data D2 at the same time and/or at the same position is an ideal case.

In practical implementations, the first sensor data D1 and the second sensor data D2 may be collected within a predefined time period and/or within a predefined distance. First sensor data D1 and second sensor data D2 having been collected within the predefined time and/or within the predefined distance are also considered to be highly comparable.

In a seventh step S27, the second sensor data D2 is received at the data processing apparatus 32 from the second exterior sensor 30. Thereafter, in an eighth step S28, the second sensor data D2 is provided to the first vehicle 12.

In a fifth step S15, the first sensor data D1 is received from the first exterior sensor 14 and the second sensor data D2 is received from the second vehicle 28.

Thus, both the first sensor data D1 and the second sensor data D2 are available at the data processing apparatus 16.

Based thereon, in a sixth step S16, a first quality indicator Q1 describing a quality of the received first sensor data D1 and a second quality indicator Q2 describing a quality of the received second sensor data D2 are determined. To this end, an object detection technique may be applied to the first sensor data D1 and to the second sensor data D2. As has been explained before, the object recognition technique may return a detected object and a confidence value describing the confidence by which the subject has been detected. An alternative term for such a confidence indicator is a detection accuracy. The confidence value may be used as the quality indicator, i.e. as the first quality indicator Q1 and the second quality indicator Q2. The confidence indicator and, thus, the first quality indicator Q1 and the second quality indicator Q2, may have the form of a percentage.

This means that the same object is detected based on the first sensor data D1 and the second sensor data D2, wherein a confidence value is provided for both the first sensor data D1 and the second sensor data D2. The confidence value provided in respect of the first sensor data D1 is used as a first quality indicator Q1 and the confidence value provided in connection with the second sensor data D2 is used as a second quality indicator

Q2.

The second quality indicator Q2 and the first quality indicator Q1 are compared.

In a case in which the first quality indicator Q1 and the second quality indicator Q2 differ by less than a predefined difference threshold, the method is abandoned and the first exterior sensor 14 is considered not to be obstructed.

In a case in which the first quality indicator Q1 and the second quality indicator Q2 differ by the predefined difference threshold or more, an obstruction notification is triggered by the data processing apparatus 16. This constitutes a seventh step S17.

The obstruction notification may be a visual notification or an audible notification for a driver of the first vehicle 12. This allows the driver to take appropriate measures to eliminate the obstruction of the first exterior sensor 14.

Figure 2 shows another traffic situation. In the following, only the differences with respect to the traffic situation of Figure 1 will be explained. Moreover, details of the first vehicle and the second vehicle which have already been shown in Figure 1 are not shown once again in Figure 2.

In the traffic situation of Figure 2, the first vehicle 12 is parked besides the road 10.

This is due to the fact that the first quality indicator Q1 describing the quality of the first sensor data D1 has been inferior to a stopping quality threshold while the first vehicle 12 was traveling in an autonomous driving mode. In such a situation, stopping of the first vehicle is triggered since continued travel is considered not to be safe.

Also from the stopped position, the first vehicle 12 is able to carry out the method for detecting an obstruction of the first exterior sensor 14 of the first vehicle 12.

The second vehicle 28 may carry out the method for assisting a detection of an obstruction of the first exterior sensor 14 of the first vehicle 12 by the second vehicle 28 comprising the second exterior sensor 30 that has been explained in connection with Figure 1.

Altogether, in both the above-described traffic situations second sensor data D2 of the second sensor 30 of the second vehicle 28 is used for detecting an obstruction of the first sensor 14 of the first vehicle 12.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: road
- 10a: lane
- 10b: lane
- 12: first vehicle
- 14: first exterior sensor
- 16: data processing apparatus of the first vehicle
- 18: data processing unit of the data processing apparatus of the first vehicle
- 20: data storage unit of the data processing apparatus of the first vehicle
- 22: computer-readable storage medium of the data processing apparatus of the first vehicle
- 24: computer program of the data processing apparatus of the first vehicle
- 26: means for carrying out the method for detecting an obstruction of the first exterior sensor of a first vehicle
- 28: second vehicle
- 30: second exterior sensor
- 32: data processing apparatus of the second vehicle
- 34: data processing unit of the data processing apparatus of the second vehicle
- 36: data storage unit of the data processing apparatus of the second vehicle
- 38: computer-readable storage medium of the data processing apparatus of the second vehicle
- 40: computer program of the data processing apparatus of the second vehicle
- 42: means for carrying out the method for assisting a detection of an obstruction of a first exterior sensor of a first vehicle by a second vehicle comprising a second exterior sensor
- 44: system for detecting an obstruction of a first exterior sensor of a first vehicle

- CR: comparison request
- D1: first sensor data
- D2: second sensor data
- L1: standard driving direction of lane
- L2: standard driving direction of lane
- Q1: first quality indicator
- Q2: second quality indicator
- RC: readiness confirmation
- S11: first step of the method for detecting an obstruction of the first exterior sensor
- S12: second step of the method for detecting an obstruction of the first exterior sensor
- S13: third step of the method for detecting an obstruction of the first exterior sensor
- S14: fourth step of the method for detecting an obstruction of the first exterior sensor
- S15: fifth step of the method for detecting an obstruction of the first exterior sensor
- S16: sixth step of the method for detecting an obstruction of the first exterior sensor
- S17: seventh step of the method for detecting an obstruction of the first exterior sensor
- S21: first step of the method for assisting a detection of an obstruction
- S22: second step of the method for assisting a detection of an obstruction
- S23: third step of the method for assisting a detection of an obstruction
- S24: fourth step of the method for assisting a detection of an obstruction
- S25: fifth step of the method for assisting a detection of an obstruction
- S26: sixth step of the method for assisting a detection of an obstruction
- S27: seventh step of the method for assisting a detection of an obstruction
- S28: eighth step of the method for assisting a detection of an obstruction
- T: trajectory of the second vehicle

## Claims

1. A method for detecting an obstruction of a first exterior sensor (14) of a first vehicle (12), the method comprising:
- determining that the first exterior sensor (14) provides sensor data of reduced quality (S11),
- providing a comparison request (CR) for a second vehicle (28), wherein the comparison request (CR) comprises a request to provide second sensor data (D2) from a second exterior sensor (30) of the second vehicle (28) (S12),
- receiving a readiness confirmation (RC) from the second vehicle (28), wherein the readiness confirmation (RC) comprises collection time data describing a collection time of the second sensor data and/or collection position data describing a collection position when the second sensor data are collected (S13),
- triggering collecting first sensor data (D1) by the first exterior sensor (14) based on the collection time and/or collection position of the readiness confirmation (RC) (S14),
- receiving first sensor data (D1) from the first exterior sensor (14) and receiving second sensor data (D2) from the second vehicle (28) (S15),
- determining a first quality indicator (Q1) describing a quality of the received first sensor data (D1), determining a second quality indicator (Q2) describing a quality of the received second sensor data (D2), and comparing the second quality indicator (Q2) to the first quality indicator (Q1) (S16), and
- triggering an obstruction notification if the first quality indicator (Q1) and the second quality indicator (Q2) differ by a predefined difference threshold or more (S17).

2. The method of claim 1, wherein determining that the first exterior sensor (14) provides sensor data of reduced quality (S11) comprises:
- receiving first sensor data (D1) from the first exterior sensor (14),
- determining a first quality indicator (Q1) describing a quality of the received first sensor data (D1) and comparing the determined quality indicator (Q1) with a quality threshold describing a lower quality acceptance limit, and
- determining that the first quality indicator (Q1) is inferior to the lower quality acceptance limit.

3. The method of claim 1 or 2, wherein the readiness confirmation (RC) comprises:
collection time data describing a collection time and/or collection position data describing a collection position, and
wherein collecting first sensor data (D1) is triggered based on the collection time data and/or wherein collecting first sensor data (D1) is triggered based on the collection position data.

4. The method of any one of the preceding claims, wherein determining a first quality indicator (Q1) and determining a second quality indicator (Q2) comprises applying an object detection technique to the first sensor data (D1) and to the second sensor data (D2).

5. The method of any one of the preceding claims, wherein the comparison request (CR) comprises position data describing a position of the first vehicle (12) and/or identification data describing an identity of the first vehicle (12).

6. A method for assisting a detection of an obstruction of a first exterior sensor (14) of a first vehicle (12), the first vehicle (12) executing a method according to any one of claims 1 to 5, by a second vehicle (28) comprising a second exterior sensor (30), the method comprising:
- receiving a comparison request (CR) from the first vehicle (12), wherein the comparison request (CR) comprises a request to provide second sensor data (D2) from the second exterior sensor (30) of the second vehicle (28) (S21),
- providing a readiness confirmation (RC) for the first vehicle (12), wherein the readiness confirmation (RC) comprises collection time data describing a collection time of the second sensor data and/or collection position data describing a collection position when the second sensor data are collected (S25),
- triggering collecting second sensor data (D2) by the second exterior sensor (30) based on the readiness confirmation (RC) (S26),
- receiving second sensor data (D2) from the second exterior sensor (30) (S27),
and
- providing second sensor data (D2) to the first vehicle (12) (S28).

7. The method of claim 6, further comprising determining a collection time and/or a collection position (S23),
wherein the readiness confirmation (RC) comprises collection time data describing the collection time and/or collection position data describing the collection position, and
wherein collecting the second sensor data (D2) is triggered based on the collection time data and/or wherein collecting the second sensor data (D2) is triggered based on the collection position data.

8. The method of claim 6 or claim 7, wherein the comparison request (CR) comprises position data describing a position of the first vehicle (12) and/or identification data describing an identity of the first vehicle (12), and wherein the method further comprises triggering detecting the first vehicle (12) based on the position data and/or the identification data.

9. The method of claims 7 or 8, further comprising determining the collection time and/or the collection position based on the detection of the first vehicle (12).

10. The method of any one of claims 6 to 9, further comprising triggering moving the second vehicle (28) in an assistance position adjacent to the first vehicle (12) and providing a readiness confirmation (RC) when reaching the assistance position (S24).

11. A data processing apparatus (16, 32) comprising means for carrying out at least one of the methods of any one of the preceding claims.

12. A computer program (24, 40) comprising instructions which, when the computer program (24, 40) is executed by a computer, cause the computer to carry out at least one of the methods of claims 1 to 10.

13. A computer-readable storage medium (22, 38) comprising instructions which, when executed by a computer, cause the computer to carry out at least one of the methods of claims 1 to 10.

14. A system (44) for detecting an obstruction of a first exterior sensor (14) of a first vehicle (12), comprising a first data processing apparatus (16) comprising means for carrying out the method of any one of claims 1 to 5 and a second data processing apparatus (32) comprising means for carrying out the method of any one of claims 6 to 10.

15. A use of second sensor data (D2) of a second sensor (30) of a second vehicle (28) for detecting an obstruction of a first sensor (14) of a first vehicle (12), wherein each of the first and second vehicle executing a method according to any one of claims 1 to 10.

## Patentansprüche

1. Verfahren zum Detektieren einer Blockierung eines ersten Außensensors (14) eines ersten Fahrzeugs (12), wobei das Verfahren Folgendes umfasst:
- Bestimmen, dass der erste Außensensor (14) Sensordaten mit reduzierter Qualität bereitstellt (S11),
- Bereitstellen einer Vergleichsanforderung (CR) für ein zweites Fahrzeug (28), wobei die Vergleichsanforderung (CR) eine Anforderung zum Bereitstellen von zweiten Sensordaten (D2) von einem zweiten Außensensor (30) des zweiten Fahrzeugs (28) umfasst (S12),
- Empfangen einer Bereitschaftsbestätigung (RC) von dem zweiten Fahrzeug (28), wobei die Bereitschaftsbestätigung (RC) Erfassungszeitdaten, die eine Erfassungszeit der zweiten Sensordaten beschreiben, und/oder Erfassungspositionsdaten, die eine Erfassungsposition bei Erfassen der zweiten Sensordaten beschreiben, umfasst (S13),
- Auslösen eines Erfassens von ersten Sensordaten (D1) durch den ersten Außensensor (14) basierend auf der Erfassungszeit und/oder der Erfassungsposition der Bereitschaftsbestätigung (RC) (S14),
- Empfangen von ersten Sensordaten (D1) von dem ersten Außensensor (14) und Empfangen von zweiten Sensordaten (D2) von dem zweiten Fahrzeug (28) (S15),
- Bestimmen eines ersten Qualitätsindikators (Q1), der eine Qualität der empfangenen ersten Sensordaten (D1) beschreibt, Bestimmen eines zweiten Qualitätsindikators (Q2), der eine Qualität der empfangenen zweiten Sensordaten (D2) beschreibt, und Vergleichen des zweiten Qualitätsindikators (Q2) mit dem ersten Qualitätsindikator (Q1) (S16), und
- Auslösen einer Blockierungsbenachrichtigung, wenn sich der erste Qualitätsindikator (Q1) und der zweite Qualitätsindikator (Q2) um einen vordefinierten Differenzschwellenwert oder mehr unterscheiden (S17).

2. Verfahren nach Anspruch 1, wobei das Bestimmen, dass der erste Außensensor (14) Sensordaten mit reduzierter Qualität bereitstellt (S11), Folgendes umfasst:
- Empfangen von ersten Sensordaten (D1) von dem ersten Außensensor (14),
- Bestimmen eines ersten Qualitätsindikators (Q1), der eine Qualität der empfangenen ersten Sensordaten (D1) beschreibt, und Vergleichen des bestimmten Qualitätsindikators (Q1) mit einem Qualitätsschwellenwert, der eine Qualitätsakzeptanzuntergrenze beschreibt, und
- Bestimmen, dass der erste Qualitätsindikator (Q1) kleiner als die Qualitätsakzeptanzuntergrenze ist.

3. Verfahren nach Anspruch 1 oder 2, wobei die Bereitschaftsbestätigung (RC) Folgendes umfasst:
Erfassungszeitdaten, die eine Erfassungszeit beschreiben, und/oder Erfassungspositionsdaten, die eine Erfassungsposition beschreiben, und
wobei das Erfassen von ersten Sensordaten (D1) basierend auf den Erfassungszeitdaten ausgelöst wird und/oder wobei das Erfassen von ersten Sensordaten (D1) basierend auf den Erfassungspositionsdaten ausgelöst wird.

4. Verfahren nach einem der vorhergehenden Ansprüche, wobei das Bestimmen eines ersten Qualitätsindikators (Q1) und das Bestimmen eines zweiten Qualitätsindikators (Q2) Anwenden einer Objektdetektionstechnik auf die ersten Sensordaten (D1) und auf die zweiten Sensordaten (D2) umfasst.

5. Verfahren nach einem der vorhergehenden Ansprüche, wobei die Vergleichsanforderung (CR) Positionsdaten, die eine Position des ersten Fahrzeugs (12) beschreiben, und/oder Identifikationsdaten, die eine Identität des ersten Fahrzeugs (12) beschreiben, umfasst.

6. Verfahren zum Unterstützen einer Detektion einer Blockierung eines ersten Außensensors (14) eines ersten Fahrzeugs (12), wobei das erste Fahrzeug (12) ein Verfahren nach einem der Ansprüche 1 bis 5 ausführt, durch ein zweites Fahrzeug (28), das einen zweiten Außensensor (30) umfasst, wobei das Verfahren Folgendes umfasst:
- Empfangen einer Vergleichsanforderung (CR) von dem ersten Fahrzeug (12), wobei die Vergleichsanforderung (CR) eine Anforderung zum Bereitstellen von zweiten Sensordaten (D2) von dem zweiten Außensensor (30) des zweiten Fahrzeugs (28) (S21) umfasst,
- Bereitstellen einer Bereitschaftsbestätigung (RC) für das erste Fahrzeug (12), wobei die Bereitschaftsbestätigung (RC) Erfassungszeitdaten, die eine Erfassungszeit der zweiten Sensordaten beschreiben, und/oder Erfassungspositionsdaten, die eine Erfassungsposition bei Erfassen der zweiten Sensordaten beschreiben, umfasst (S25),
- Auslösen eines Erfassens von zweiten Sensordaten (D2) durch den zweiten Außensensor (30) basierend auf der Bereitschaftsbestätigung (RC) (S26),
- Empfangen von zweiten Sensordaten (D2) von dem zweiten Außensensor (30) (S27), und
- Bereitstellen von zweiten Sensordaten (D2) zu dem ersten Fahrzeug (12) (S28).

7. Verfahren nach Anspruch 6, ferner umfassend Bestimmen einer Erfassungszeit und/oder einer Erfassungsposition (S23),
wobei die Bereitschaftsbestätigung (RC) Erfassungszeitdaten, die die Erfassungszeit beschreiben, und/oder Erfassungspositionsdaten, die die Erfassungsposition beschreiben, umfasst, und
wobei das Erfassen der zweiten Sensordaten (D2) basierend auf den Erfassungszeitdaten ausgelöst wird und/oder wobei das Erfassen der zweiten Sensordaten (D2) basierend auf den Erfassungspositionsdaten ausgelöst wird.

8. Verfahren nach Anspruch 6 oder Anspruch 7, wobei die Vergleichsanforderung (CR) Positionsdaten, die eine Position des ersten Fahrzeugs (12) beschreiben, und/oder Identifikationsdaten, die eine Identität des ersten Fahrzeugs (12) beschreiben, umfasst, und wobei das Verfahren ferner Auslösen eines Detektierens des ersten Fahrzeugs (12) basierend auf den Positionsdaten und/oder den Identifikationsdaten umfasst.

9. Verfahren nach Anspruch 7 oder 8, ferner umfassend Bestimmen der Erfassungszeit und/oder der Erfassungsposition basierend auf der Detektion des ersten Fahrzeugs (12).

10. Verfahren nach einem der Ansprüche 6 bis 9, ferner umfassend Auslösen eines Bewegens des zweiten Fahrzeugs (28) in eine Unterstützungsposition angrenzend an das erste Fahrzeug (12) und Bereitstellen einer Bereitschaftsbestätigung (RC) bei Erreichen der Unterstützungsposition (S24).

11. Datenverarbeitungseinrichtung (16, 32), die Mittel zum Durchführen von mindestens einem der Verfahren nach einem der vorhergehenden Ansprüche umfasst.

12. Computerprogramm (24, 40), das Anweisungen umfasst, die, wenn das Computerprogramm (24, 40) durch einen Computer ausgeführt wird, den Computer dazu veranlassen, mindestens eines der Verfahren nach den Ansprüchen 1 bis 10 durchzuführen.

13. Computerlesbares Speichermedium (22, 38), das Anweisungen umfasst, die, wenn sie durch einen Computer ausgeführt werden, den Computer veranlassen, mindestens eines der Verfahren nach den Ansprüchen 1 bis 10 durchzuführen.

14. System (44) zum Detektieren einer Blockierung eines ersten Außensensors (14) eines ersten Fahrzeugs (12), umfassend eine erste Datenverarbeitungseinrichtung (16), die Mittel zum Durchführen des Verfahrens nach einem der Ansprüche 1 bis 5 umfasst, und eine zweite Datenverarbeitungseinrichtung (32), die Mittel zum Durchführen des Verfahrens nach einem der Ansprüche 6 bis 10 umfasst.

15. Verwendung von zweiten Sensordaten (D2) eines zweiten Sensors (30) eines zweiten Fahrzeugs (28) zum Detektieren einer Blockierung eines ersten Sensors (14) eines ersten Fahrzeugs (12), wobei sowohl das erste als auch das zweite Fahrzeug ein Verfahren nach einem der Ansprüche 1 bis 10 ausführen.

## Revendications

1. Procédé de détection d'une obstruction d'un premier capteur extérieur (14) d'un premier véhicule (12), le procédé comprenant :
- la détermination du fait que le premier capteur extérieur (14) fournit des données de capteur de qualité réduite (S11),
- la fourniture d'une demande de comparaison (CR) pour un deuxième véhicule (28), la demande de comparaison (CR) comprenant une demande de fourniture de deuxièmes données de capteur (D2) provenant d'un deuxième capteur extérieur (30) du deuxième véhicule (28) (S12),
- la réception d'une confirmation de disponibilité (RC) provenant du deuxième véhicule (28), la confirmation de disponibilité (RC) comprenant des données d'instant de collecte décrivant un instant de collecte des deuxièmes données de capteur et/ou des données de position de collecte décrivant une position de collecte lorsque les deuxièmes données de capteur sont collectées (S13),
- le déclenchement de la collecte de premières données de capteur (D1) par le premier capteur extérieur (14) sur la base de l'instant de collecte et/ou de la position de collecte de la confirmation de disponibilité (RC) (S14),
- la réception de premières données de capteur (D1) provenant du premier capteur extérieur (14) et la réception de deuxièmes données de capteur (D2) provenant du deuxième véhicule (28) (S15),
- la détermination d'un premier indicateur de qualité (Q1) décrivant une qualité des premières données de capteur (D1) reçues, la détermination d'un deuxième indicateur de qualité (Q2) décrivant une qualité des deuxièmes données de capteur (D2) reçues, et la comparaison du deuxième indicateur de qualité (Q2) au premier indicateur de qualité (Q1) (S16), et
- le déclenchement d'une notification d'obstruction si un écart entre le premier indicateur de qualité (Q1) et le deuxième indicateur de qualité (Q2) est supérieur ou égal à un seuil d'écart prédéfini (S17).

2. Procédé selon la revendication 1, dans lequel la détermination du fait que le premier capteur extérieur (14) fournit des données de capteur de qualité réduite (S11) comprend :
- la réception de premières données de capteur (D1) provenant du premier capteur extérieur (14),
- la détermination d'un premier indicateur de qualité (Q1) décrivant une qualité des premières données de capteur (D1) reçues et la comparaison de l'indicateur de qualité (Q1) déterminé à un seuil de qualité décrivant une limite inférieure d'acceptation de qualité, et
- la détermination du fait que le premier indicateur de qualité (Q1) est inférieur à la limite inférieure d'acceptation de qualité.

3. Procédé selon la revendication 1 ou 2, dans lequel la confirmation de disponibilité (RC) comprend :
des données d'instant de collecte décrivant un instant de collecte et/ou des données de position de collecte décrivant une position de collecte, et
dans lequel la collecte de premières données de capteur (D1) est déclenchée sur la base des données d'instant de collecte et/ou dans lequel la collecte de premières données de capteur (D1) est déclenchée sur la base des données de position de collecte.

4. Procédé selon l'une quelconque des revendications précédentes, dans lequel la détermination d'un premier indicateur de qualité (Q1) et la détermination d'un deuxième indicateur de qualité (Q2) comprennent l'application d'une technique de détection d'objet aux premières données de capteur (D1) et aux deuxièmes données de capteur (D2).

5. Procédé selon l'une quelconque des revendications précédentes, dans lequel la demande de comparaison (CR) comprend des données de position décrivant une position du premier véhicule (12) et/ou des données d'identification décrivant une identité du premier véhicule (12).

6. Procédé d'aide à une détection d'une obstruction d'un premier capteur extérieur (14) d'un premier véhicule (12), le premier véhicule (12) exécutant un procédé selon l'une quelconque des revendications 1 à 5, par un deuxième véhicule (28) comprenant un deuxième capteur extérieur (30), le procédé comprenant :
- la réception d'une demande de comparaison (CR) provenant du premier véhicule (12), la demande de comparaison (CR) comprenant une demande de fourniture de deuxièmes données de capteur (D2) provenant du deuxième capteur extérieur (30) du deuxième véhicule (28) (S21),
- la fourniture d'une confirmation de disponibilité (RC) pour le premier véhicule (12), la confirmation de disponibilité (RC) comprenant des données d'instant de collecte décrivant un instant de collecte des deuxièmes données de capteur et/ou des données de position de collecte décrivant une position de collecte lorsque les deuxièmes données de capteur sont collectées (S25),
- le déclenchement de la collecte de deuxièmes données de capteur (D2) par le deuxième capteur extérieur (30) sur la base de la confirmation de disponibilité (RC) (S26),
- la réception de deuxièmes données de capteur (D2) provenant du deuxième capteur extérieur (30) (S27), et
- la fourniture de deuxièmes données de capteur (D2) au premier véhicule (12) (S28).

7. Procédé selon la revendication 6, comprenant en outre la détermination d'un instant de collecte et/ou d'une position de collecte (S23),
dans lequel la confirmation de disponibilité (RC) comprend des données d'instant de collecte décrivant l'instant de collecte et/ou des données de position de collecte décrivant la position de collecte, et
dans lequel la collecte des deuxièmes données de capteur (D2) est déclenchée sur la base des données d'instant de collecte et/ou dans lequel la collecte des deuxièmes données de capteur (D2) est déclenchée sur la base des données de position de collecte.

8. Procédé selon la revendication 6 ou la revendication 7, dans lequel la demande de comparaison (CR) comprend des données de position décrivant une position du premier véhicule (12) et/ou des données d'identification décrivant une identité du premier véhicule (12), et le procédé comprenant en outre le déclenchement de la détection du premier véhicule (12) sur la base des données de position et/ou des données d'identification.

9. Procédé selon la revendication 7 ou 8, comprenant en outre la détermination de l'instant de collecte et/ou de la position de collecte sur la base de la détection du premier véhicule (12).

10. Procédé selon l'une quelconque des revendications 6 à 9, comprenant en outre le déclenchement du déplacement du deuxième véhicule (28) vers une position d'aide adjacente au premier véhicule (12) et la fourniture d'une confirmation de disponibilité (RC) lorsque la position d'aide est atteinte (S24).

11. Appareil de traitement de données (16, 32) comprenant des moyens pour mettre en œuvre au moins l'un des procédés selon l'une quelconque des revendications précédentes.

12. Programme d'ordinateur (24, 40) comprenant des instructions qui, lorsque le programme d'ordinateur (24, 40) est exécuté par un ordinateur, amènent l'ordinateur à mettre en œuvre au moins l'un des procédés selon les revendications 1 à 10.

13. Support de stockage lisible par ordinateur (22, 38) comprenant des instructions qui, lorsqu'elles sont exécutées par un ordinateur, amènent l'ordinateur à mettre en œuvre au moins l'un des procédés selon les revendications 1 à 10.

14. Système (44) de détection d'une obstruction d'un premier capteur extérieur (14) d'un premier véhicule (12), comprenant un premier appareil de traitement de données (16) comprenant des moyens pour mettre en œuvre le procédé selon l'une quelconque des revendications 1 à 5 et un deuxième appareil de traitement de données (32) comprenant des moyens pour mettre en œuvre le procédé selon l'une quelconque des revendications 6 à 10.

15. Utilisation de deuxièmes données de capteur (D2) d'un deuxième capteur (30) d'un deuxième véhicule (28) pour la détection d'une obstruction d'un premier capteur (14) d'un premier véhicule (12), chacun des premier et deuxième véhicules exécutant un procédé selon l'une quelconque des revendications 1 à 10.
